(19) Europäisches Patentamt
European Patent Office
Office européen des brevets

(11) **EP 4 325 654 B1**

(12) **EUROPEAN PATENT SPECIFICATION**

(45) Date of publication and mention
of the grant of the patent:
**18.02.2026  Bulletin 2026/08**

(21) Application number: **22898747.5**

(22) Date of filing: **18.07.2022**

(51) International Patent Classification (IPC):
*H01M 50/567* (2021.01)    *H01M 50/559* (2021.01)
*H01M 50/179* (2021.01)    *H01M 50/186* (2021.01)
*H01M 50/193* (2021.01)    *H01M 50/198* (2021.01)
*H01M 50/538* (2021.01)    *H01M 10/04* (2006.01)
*H01M 50/167* (2021.01)    *H01M 50/342* (2021.01)
*H01M 50/184* (2021.01)    *H01M 50/213* (2021.01)
*H01M 50/55* (2021.01)      *H01M 50/562* (2021.01)
*H01M 50/566* (2021.01)

(52) Cooperative Patent Classification (CPC):
**H01M 10/04; H01M 10/0431; H01M 50/167;**
**H01M 50/179; H01M 50/184; H01M 50/186;**
**H01M 50/193; H01M 50/198; H01M 50/213;**
**H01M 50/342; H01M 50/3425; H01M 50/538;**
**H01M 50/55; H01M 50/559; H01M 50/562;**   (Cont.)

(86) International application number:
**PCT/KR2022/010446**

(87) International publication number:
**WO 2023/096062 (01.06.2023 Gazette 2023/22)**

(54) **RIVETING STRUCTURE FOR ELECTRODE TERMINAL, AND BATTERY CELL, BATTERY PACK, AND VEHICLE COMPRISING SAME**

NIETSTRUKTUR FÜR ELEKTRODENANSCHLUSS SOWIE BATTERIEZELLE, BATTERIEPACK UND FAHRZEUG DAMIT

STRUCTURE DE RIVETAGE POUR BORNE D'ÉLECTRODE, ET CELLULE DE BATTERIE, BLOC-BATTERIE ET VÉHICULE LA COMPRENANT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **26.11.2021  KR 20210165315**

(43) Date of publication of application:
**21.02.2024  Bulletin 2024/08**

(73) Proprietor: **LG Energy Solution, Ltd.**
**Seoul 07335 (KR)**

(72) Inventors:
• **WON, Jin Hyeok**
**Seoul 34122 (KR)**
• **RYU, Duk Hyun**
**Seoul 34122 (KR)**
• **LEE, Byounggu**
**Seoul 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
EP-A2- 4 239 784       CN-U- 206 461 019
JP-A- 2021 057 234    KR-A- 20010 056 363
KR-A- 20050 121 914  KR-A- 20200 020 173
US-A1- 2004 023 108

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
**H01M 50/566; H01M 50/567;** H01M 2220/20;
Y02E 60/10

**Description**

[Technical Field]

The present invention relates to a riveting structure of an electrode terminal, and a battery cell, a battery pack, and a vehicle including the same.

[Background Art]

A secondary battery that is easy to be applied according to product groups and has electrical characteristics, such as high energy density, is generally applied to an Electric Vehicle (EV) and a Hybrid Electric Vehicle (HEV) driven by an electric driving source, as well as portable devices.

The secondary battery is attracting attention as a new energy source for improving eco-friendliness and energy efficiency because the secondary battery has not only the primary advantage of dramatically reducing the use of fossil fuels, but also the advantage that no by-products are generated from the use of energy.

The types of secondary batteries currently widely used include lithium ion batteries, lithium polymer batteries, nickel cadmium batteries, nickel hydride batteries, nickel zinc batteries, and the like. The operating voltage of the unit secondary battery cell is about 2.5 V to 4.5 V. Therefore, when a higher output voltage is required, a plurality of battery cells is connected in series to form a battery pack. In addition, according to the charge/discharge capacity required for the battery pack, a plurality of battery cells is connected in parallel to form a battery pack. Accordingly, the number of battery cells included in the battery pack and the type of electrical connection may be variously set according to a required output voltage and/or charge/discharge capacity.

On the other hand, as types of secondary battery cells, cylindrical, prismatic, and pouch-type battery cells are known. The battery cell may be a cylindrical battery cell. In the battery cell, a separation membrane that is an insulator is interposed between a positive electrode and a negative electrode, the positive electrode, the separation membrane, and the negative electrode are wound to form an electrode assembly in the form of a jelly roll, and the electrode assembly is inserted into a battery can together with an electrolyte to form a battery. In addition, a strip-shaped electrode tab may be connected to an uncoated portion of each of the positive electrode and the negative electrode, and the electrode tab electrically connects the electrode assembly and the externally exposed electrode terminal. For reference, the positive electrode terminal is a cap plate of a sealing body sealing an opening of the battery can, and the negative electrode terminal is the battery can.

However, according to the conventional battery cell having the foregoing structure, since current is concentrated in the strip-shaped electrode tab coupled to the uncoated portion of the positive electrode and/or the uncoated portion of the negative electrode, there are problems in that resistance is high, a lot of heat is generated, and current collection efficiency is not good.

For small cylindrical battery cells with a form factor of 18650 or 21700, resistance and heat are not a big issue. However, when the form factor is increased in order to apply the cylindrical battery cell to an electric vehicle, a problem may arise in that the cylindrical battery cell ignites as a lot of heat is generated around the electrode tab during the rapid charging process.

In order to solve the problem, a battery cell (so-called tab-less battery cell) having a structure in which a positive electrode uncoated portion and a negative electrode uncoated portion are positioned at the top end and the bottom end of the jelly roll type electrode assembly, respectively, and a current collecting plate is welded to the uncoated portions to improve current collecting efficiency is presented.

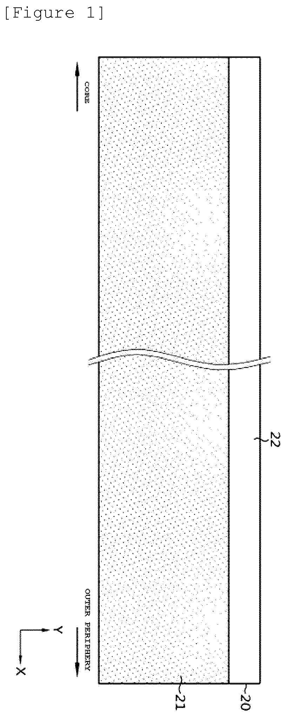

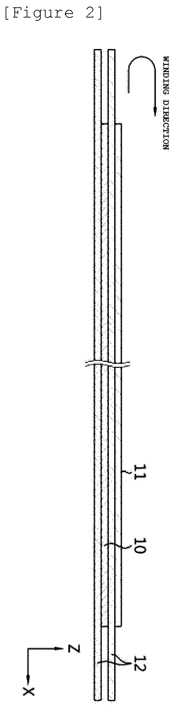

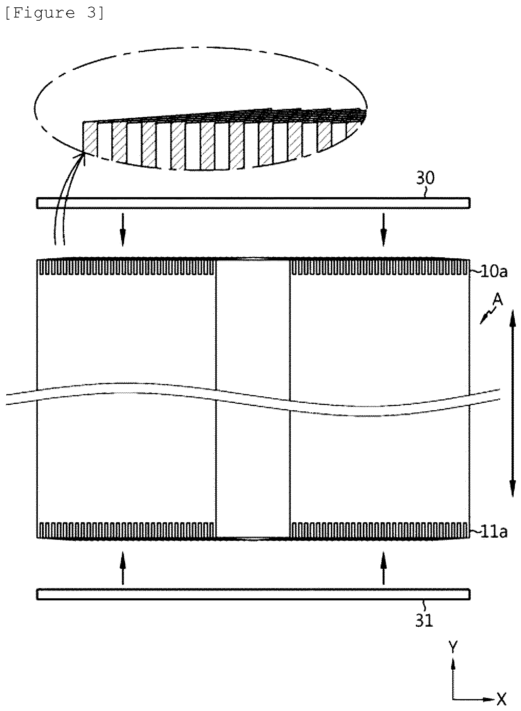

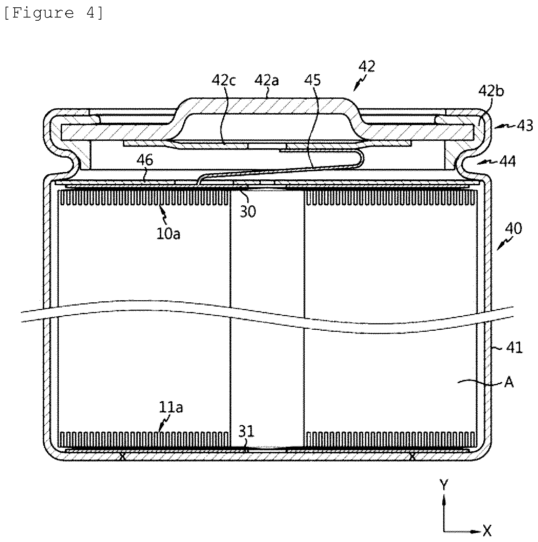

FIGS. 1 to 3 are diagrams illustrating a manufacturing process of a tab-less battery cell. FIG. 1 illustrates a structure of an electrode plate, FIG. 2 illustrates a winding process of the electrode plate, and FIG. 3 illustrates a process of welding a current collecting plate to a bent surface of an uncoated portion. FIG. 4 is a cross-sectional view of the tab-less battery cell taken in a longitudinal direction Y.

Referring to FIGS. 1 to 4, each of a positive electrode plate 10 and a negative electrode plate 11 has a structure in which a sheet-shaped current collector 20 is coated with an active material 21, and includes an uncoated portion 22 at one long side in a winding direction X.

An electrode assembly A is manufactured by sequentially stacking the positive electrode plate 10 and the negative electrode plate 11 together with two separation membranes 12 as illustrated in FIG. 2 and winding them in one direction X. In this case, the uncoated portions of the positive electrode plate 10 and the negative electrode plate 11 are disposed at opposite directions to each other.

After the winding process, the uncoated portion 10a of the positive electrode plate 10 and the uncoated portion 11a of the negative electrode plate 11 are bent toward a core. Then, current collecting plates 30 and 31 are welded to the uncoated portions 10a and 11a, respectively, to be coupled.

Since a separate electrode tab is not coupled to the positive electrode uncoated portion 10a and the negative electrode uncoated portion 11a, the current collecting plates 30 and 31 are connected to an external electrode terminal, and a current path is formed with a large cross-sectional area along the winding axis direction (refer to the arrow) of the electrode assembly A, there is an advantage in that the resistance of the battery cell can be lowered. This is because resistance is inversely proportional to the cross-sectional area of the path through which the current flows.

However, as the form factor of the cylindrical battery cell increases and the size of the charging current during rapid charging increases, the heat problem also occurs again in the tab-less battery cell.

In particular, the tab-less battery cell 40 in the related art includes a battery can 41 and a sealing body 42 as illustrated in FIG. 4. The sealing body 42 includes a cap plate 42a, a sealing gasket 42b, and a connecting plate 42c. The sealing gasket 42b surrounds the edge of the cap plate 42a and is fixed by the crimping portion 43. Further, the electrode assembly A is fixed in the battery can 41 by a beading portion 44 in order to prevent vertical flow.

Typically, the positive electrode terminal is the cap plate 42a of the sealing body 42 and the negative electrode terminal is the battery can 41. Therefore, the current collecting plate 30 coupled to the uncoated portion 10a of the positive electrode plate 10 is electrically connected to the connection plate 42c attached to the cap plate 42a through a strip-shaped lead 45. Further, the current collecting plate 31 coupled to the uncoated portion 11a of the negative electrode plate 11 is electrically connected to the bottom of the battery can 41. An insulator 46 covers the current collecting plate 30 to prevent the battery can 41 and the uncoated portion 10a of the positive electrode plate 10 having different polarity from contacting each other and causing a short circuit.

When the current collecting plate 30 is connected to the connecting plate 42c, the lead 45 in the form of a strip is used. The lead 45 is separately attached to the current collecting plate 30 or manufactured integrally with the current collecting plate 30. However, since the lead 45 is in the form of a thin strip, the cross-sectional area is small, so that when a rapid charging current flows, a lot of heat is generated. Further, excessive heat generated from the lead 45 is transferred to the electrode assembly A to contract the separation membrane 12 to cause an internal short circuit, which is a major cause of thermal runaway.

The lead 45 also occupies a significant installation space within the battery can 41. Therefore, the battery cell 40 including the lead 45 has low space efficiency, and thus there is a limit in increasing the energy density.

In addition, in order to connect the tab-less battery cells 40 in the related art in series and/or in parallel, it is necessary to connect the bus bar components to the cap plate 42a of the sealing body 42 and the bottom surface of the battery can 41, so that the space efficiency decreases. A battery pack mounted on an electric vehicle includes hundreds of battery cells 40. Accordingly, the inefficiency of the electrical wiring causes considerable inconvenience in the assembly process of the electric vehicle and maintenance of the battery pack.

EP 4 239 784 A2, which constitutes prior art pursuant to Art. 54(3) EPC, discloses a fixing structure of an electrode terminal, and a battery, a battery pack and a vehicle including the same. The fixing structure of an electrode terminal includes a battery housing configured to be opened at one side and have a bottom at the other side in which a perforation hole is formed; an electrode terminal installed through the perforation hole not to contact an inner wall of the perforation hole; and a terminal gasket interposed between the electrode terminal and the perforation hole, and the electrode terminal includes a body portion inserted into the perforation hole; an outer flange portion configured to extend along an outer surface of the bottom of the battery housing from a first side of the body portion; an inner flange portion configured to extend toward an inner surface of the bottom of the battery housing from a second side of the body portion; and a flat portion provided to an inner side of the inner flange portion. US 2004/023108 A1 discloses a battery including an electrode unit which is an electricity generating element housed in a battery can, in which the electricity can be taken out of the can via a pair of negative and positive electrode terminals which are exposed outside the can, and one of the negative and positive electrode terminals has a coating layer formed on a surface thereof that is the same material as the material of which the other of the negative and positive electrode terminals is made.

KR 20200020173 A discloses a rechargeable battery capable of improving energy density. According to the disclosure, the rechargeable battery comprises: an electrode assembly in which a first electrode, a separator, and a second electrode are alternately stacked; a can which has the electrode assembly accommodated therein and is formed with a terminal hole opened to one side; a rivet terminal which has a rivet shape and closes the terminal hole; a gasket sealing and insulating a part between the can and the rivet terminal; a first electrode lead having both sides directly in contact with the first electrode and the rivet terminal to electrically connect the first electrode and the rivet terminal; and a second electrode lead electrically connecting the second electrode and the can.

[Detailed Description of the Invention]

[Technical Problem]

The present invention is conceived under the background art, and a technical problem of the present invention is to improve a structure of an electrode terminal of a battery cell to increase space efficiency in a battery can, thereby lowering internal resistance of the battery cell and increasing energy density.

Another technical problem of the present invention is to improve a structure of an electrode terminal of a battery cell to expand a cross-sectional area of a current path, thereby improving an internal heating problem that occurs during rapid charging.

Another technical problem of the present invention is to provide a battery cell with an improved structure in which electrical wiring for series and/or parallel connection of battery cells may be performed at one side of the battery cell.

Another technical problem of the present invention is to provide a battery pack manufactured by using the battery cell with the improved structure, and a vehicle including the same.

However, the technical problems to be solved by the present invention are not limited to the above problems, and other problems not mentioned will be clearly understood by those skilled in the art from the description of the invention described below.

[Technical Solution]

The invention is defined by the independent claims. Preferred embodiments are defined in the dependent claims.

An exemplary embodiment of the present invention provides a riveting structure of an electrode terminal, including: a battery can with one side open; an electrode terminal riveted through a through hole formed in a bottom of the battery can; and a gasket provided between the electrode terminal and an outer diameter of the through hole, in which the electrode terminal includes: a body portion inserted into the through hole; an outer flange portion extending along an outer surface from a circumference of one side of the body portion exposed through the outer surface of the bottom; and an inner flange portion extending toward an inner surface from a circumference of the other side of the body portion exposed through the inner surface of the bottom, and a flat portion provided at an end of the body portion exposed through the inner surface of the bottom. The gasket includes a fluorine resin.

The gasket includes: an outer gasket portion interposed between the outer flange portion and the outer surface of the bottom; and an inner gasket portion interposed between the inner flange portion and the inner surface of the bottom. A height of the flat portion is larger than a height of the end of the inner flange portion based on the inner surface of the bottom. The thickness change rate of the outer gasket portion (satisfies the following equation,

$$0\% \leq [(X1 - X2)/X1] \cdot 100(\%) \leq 10\%$$

where X1 is the thickness of the outer gasket portion (54a) at room temperature, and X2 is the thickness of the outer gasket portion (54a) when the outer gasket portion (54a) is left at 230°C for 30 minutes.

Still another exemplary embodiment of the present invention provides a battery cell, including: an electrode assembly in which sheet-shaped first electrode plate and second electrode plate are wound with a separation membrane interposed therebetween, and which includes an uncoated portion of the first electrode plate and an uncoated portion of the second electrode plate, which are extended and exposed from both ends; the riveting structure of the electrode terminal according to the exemplary embodiment of the present invention; and a sealing body, in which the electrode assembly is accommodated in the battery can, the first electrode plate and the battery can are electrically connected, the second electrode plate and the electrode terminal are electrically connected, and the sealing body seals the open end of the battery can to be insulated from the battery can.

Yet another exemplary embodiment of the present invention provides a battery pack and a vehicle including at least one battery cell described above.

[Advantageous Effects]

According to one aspect of the present invention, it is possible to lower the internal resistance of the battery cell and increase the energy density by improving the electrode terminal structure of the battery cell to increase the space efficiency in the battery can.

The sealing gasket of the tab-less battery cell in the related art is provided between a cap plate that is as a positive electrode terminal and a battery can that is a negative electrode terminal to prevent a short circuit. Polypropylene (PP) or polybutylene terephthalate (PBT) used as a material for the sealing gasket has a low melting point, so that when the energy density of the battery cell is increased, the sealing gasket is melt which may cause a short circuit.

According to another aspect of the present invention, the gasket containing a fluorine resin is provided in order to implement the electrode terminal structure of the battery cell as described above, so that it is possible to prevent a short circuit due to a phenomenon in which the gasket melts between the electrode terminal and the battery can where high temperature heat is generated during external short evaluation or when the energy density of the battery cell is increased.

According to another aspect of the present invention, it is possible to improve the problem of internal heat generated during rapid charging by improving the electrode terminal structure of the battery cell to enlarge the cross-sectional area of the current path.

According to another aspect of the present invention, electrical wiring for series and/or parallel connection of the battery cells may be performed on one side of the battery cells.

According to another aspect of the present invention, it is possible to provide a battery pack manufactured using a battery cell having an improved structure and a vehicle including the same.

[Brief Description of Drawings]

The following drawings attached to the present specification illustrate exemplary embodiments of the present invention, and serve to help the further understanding of the technical spirit of the present invention together with the detailed description of the present invention to be described later, so that the present invention should not be construed as being limited only to the matters described in the drawings.

FIG. 1 is a top plan view illustrating a structure of an electrode plate used in a tab-less battery cell in the related art.

FIG. 2 is a diagram illustrating a winding process of an electrode assembly included in the tab-less battery cell in the related art.

FIG. 3 is a diagram illustrating a process in which a current collecting plate is welded to a bent surface of an uncoated portion of the electrode assembly of FIG. 2.

FIG. 4 is a cross-sectional view of the tab-less battery cell in the related art taken in a longitudinal direction Y.

FIG. 5 is a cross-sectional view illustrating a riveting structure of an electrode terminal according to an exemplary embodiment of the present invention.

FIG. 6 is an enlarged cross-sectional view of a portion indicated by a dotted circle in FIG. 5.

FIG. 7 is a cross-sectional view of a battery cell according to an exemplary embodiment of the present invention taken along a longitudinal direction Y.

FIG. 8 is a top plan view illustrating an example of an electrode plate structure according to the exemplary embodiment of the present invention.

FIG. 9 is a cross-sectional view of an electrode assembly in which an uncoated portion segmental structure of the electrode plate is applied to a first electrode plate and a second electrode plate taken in the longitudinal direction Y according to the exemplary embodiment of the present invention.

FIG. 10 is a cross-sectional view of the electrode assembly in which an uncoated portion is bent taken in the longitudinal direction Y according to the exemplary embodiment of the present invention.

FIG. 11 is a diagram illustrating a schematic configuration of a battery pack including battery cells according to an exemplary embodiment of the present invention.

FIG. 12 is a diagram illustrating a schematic configuration of a vehicle including a battery pack according to an exemplary embodiment of the present invention.

FIG. 13 is a photograph illustrating a phenomenon in which a gasket melts in a riveting structure of an electrode terminal in the case of a gasket according to the comparative example of the present invention.

FIG. 14 is a photograph illustrating a phenomenon in which a gasket does not melt in the riveting structure of the electrode terminal in the case of a gasket including a fluorine resin according to the exemplary embodiment of the present invention.

FIG. 15 is a photograph illustrating a cross-section of the riveting structure of the electrode terminal taken along the longitudinal direction Y of the battery cell according to the exemplary embodiment of the present invention.

<Explanation of Reference Numerals and Symbols>

10: Positive electrode plate
11: Negative electrode plate
10a: Uncoated portion of positive electrode plate
11a: Uncoated portion of negative electrode plate
12: Separation membrane
20: Current collector
21: Active material
22: Uncoated portion
30, 31: Current collecting plate
40: Tab-less battery cell
41: Battery can

42: Sealing body
42a: Cap plate
42b: Sealing gasket
42c: Connection plate
43: Crimping portion
44: Beading portion
45: Lead
46: Insulator
A: Electrode assembly
50: Electrode terminal
50a: Body portion
50b: Outer flange portion
50c: Inner flange portion
50d: Flat portion
51: Cylindrical battery can with opened one side
51a: Inner peripheral surface of lateral wall of battery can
52: Bottom
52a: Outer surface
52b: Inner surface
53: Through-hole
54: Gasket
54a: Outer gasket portion
54aT: Thickness of outer gasket portion
54b: Inner gasket portion
55: Recess portion
55a: Lateral wall of flat portion
10055b: Inclined surface of inner flange portion
56: Inner edge of through-hole
57: Facing surface facing inner flange portion
70: Battery cell
71: Electrode assembly
72: Uncoated portion of first electrode plate
73: Uncoated portion of second electrode plate
74: Sealing body
74a: Cap plate
74b: Sealing gasket
75: Crimping portion
76: Beading portion
76a: Inner peripheral surface of beading portion
77: Vent notch
78: First current collecting plate
78a: Edge of first current collecting plate
79: Second current collecting plate
79a: Center portion
80: Winding center
80': Insulation cap
80a: Welding hole
90: Electrode plate
91: Current collector
92: Active material layer
93: Uncoated portion
93': Core-side uncoated portion
93a: Segment piece
94: Insulating coating layer
100: Electrode assembly
101: Bent portion
102: Bent surface
200: Battery pack

201: Cylindrical battery cell
202: Pack housing

[Best Mode]

Hereinafter, an exemplary embodiment of the present invention will be described in detail with reference to the accompanying drawings.

Further, for helping the understanding of the invention, the accompanying drawings are not illustrated according to an actual scale, but sizes of some of the constituent elements may be exaggerated and illustrated. Further, the same reference numbers may be assigned to the same components in different constituent elements.

An exemplary embodiment of the present invention provides a riveting structure of an electrode terminal, including: a battery can with one side open; an electrode terminal riveted through a through hole formed in a bottom of the battery can; and a gasket provided between the electrode terminal and an outer diameter of the through hole, in which the electrode terminal includes: a body portion inserted into the through hole; an outer flange portion extending along an outer surface from a circumference of one side of the body portion exposed through the outer surface of the bottom; and an inner flange portion extending toward an inner surface from a circumference of the other side of the body portion exposed through the inner surface of the bottom, and the gasket includes a fluorine resin.

A battery cell according to an exemplary embodiment of the present invention may include electrode terminals riveted to the bottom of the battery can.

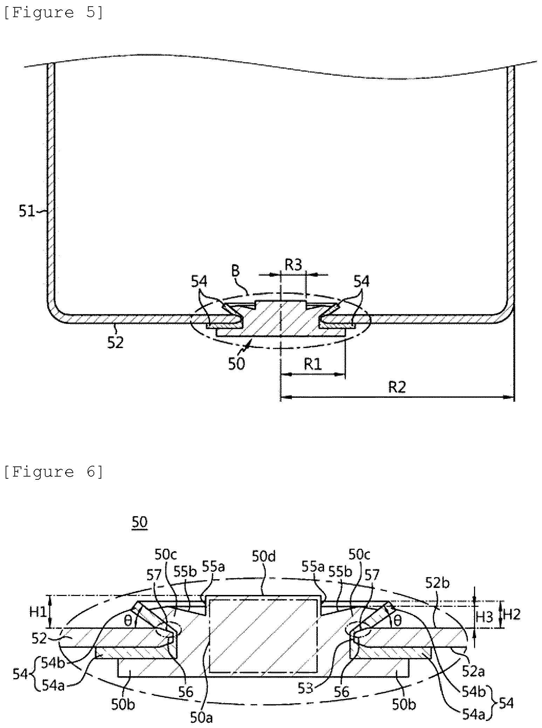

FIG. 5 is a cross-sectional view illustrating a riveting structure of an electrode terminal 50 according to the exemplary embodiment of the present invention, and FIG. 6 is an enlarged cross-sectional view of a portion indicated by a dotted circle in FIG. 5.

Referring to FIGS. 5 and 6, the riveting structure of the electrode terminal 50 according to the exemplary embodiment may include a cylindrical battery can 51 with one side open, an electrode terminal 50 riveted through a through hole 53 formed in a bottom 52 of the battery can 51, and a gasket 54 provided between the electrode terminal 50 and the outer diameter of the through hole 53.

The battery can 51 is made of a conductive metal material. In one example, the battery can 51 may be made of a steel material, and the present invention is not limited thereto.

The electrode terminal 50 is made of a conductive metal material. In one example, the electrode terminal 50 may be made of aluminum, and the present invention is not limited thereto.

Preferably, the electrode terminal 50 may include a body portion 50a inserted into the through-hole 53, an outer flange portion 50b extended along an outer surface 52a from the circumference of one side of the body portion 50a exposed through the outer surface 52a of the bottom 52 of the battery can 51, and an inner flange portion 50c extended toward an inner surface 52b from the circumference of the other side of the body portion 50a exposed through the inner surface 52b of the bottom 52 of the battery can 51.

The gasket 54 contains fluorine resin. The fluorine resin may be formed of a polymer resin having an insulation property and/or elasticity. In one example, the fluorine resin may include at least one selected from the group consisting of perfluoroalkoxy (PFA) and polytetrafluoroethylene (PTFE), but the present invention is not limited thereto.

In one example, the melting point of the fluorine resin may be about 280°C or higher, preferably about 290°C or higher, and more preferably about 300°C or higher. When the melting point of the fluorine resin satisfies the above range, the gasket does not melt even though the energy density of the battery cell is increased, thereby preventing a short circuit.

An example embodiment not falling under the literal meaning of the claims provides a riveting structure of an electrode terminal, including: a battery can with one side open; an electrode terminal riveted through a through hole formed in a bottom of the battery can; and a gasket provided between the electrode terminal and an outer diameter of the through hole, in which the electrode terminal includes: a body portion inserted into the through hole; an outer flange portion extending along an outer surface from a circumference of one side of the body portion exposed through the outer surface of the bottom; and an inner flange portion extending toward an inner surface from a circumference of the other side of the body portion exposed through the inner surface of the bottom, the gasket includes: an outer gasket portion interposed between the outer flange portion and the outer surface of the bottom; and an inner gasket portion interposed between the inner flange portion and the inner surface of the bottom, and the thickness change rate of the outer gasket portion satisfies Equation 1 below.

[Equation 1]

$$0\% \leq [(X1-X2) / X1] \times 100(\%) \leq 10\%$$

In Equation 1, X1 is the thickness of the outer gasket portion at room temperature, and X2 is the thickness of the outer gasket portion when the outer gasket portion is left at 100°C for 10 minutes.

The gasket 54 may include an outer gasket portion 54a interposed between the outer flange portion 50b and the outer surface 52a of the bottom 52 of the battery can 51 and an inner gasket portion 54b interposed between the inner flange portion 50c and the inner surface 52b of the bottom 52 of the battery can 51.

According to an additional exemplary embodiment not falling under the literal meaning of the claims, thickness change rate of the outer gasket portion 54a may satisfy Equation 1 below.

$$[\text{Equation 1}]$$

$$0\% \leq [(X1-X2) / X1] \times 100(\%) \leq 10\%$$

In Equation 1, X1 is the thickness 54aT of the outer gasket portion at room temperature, and X2 is the thickness 54aT of the outer gasket portion when the outer gasket portion is left at 100°C for 10 minutes.

The room temperature may be one temperature selected from 20°C to 25°C, for example, 21°C to 24°C, 22°C to 23°C, or 23°C.

The thickness 54aT of the outer gasket portion refers to a thickness in a direction perpendicular to the outer surface 52a of the bottom of the battery can, and may be measured by taking an image of the cross section of the battery cell 201 taken in the longitudinal direction Y by using a 3D shape measuring device.

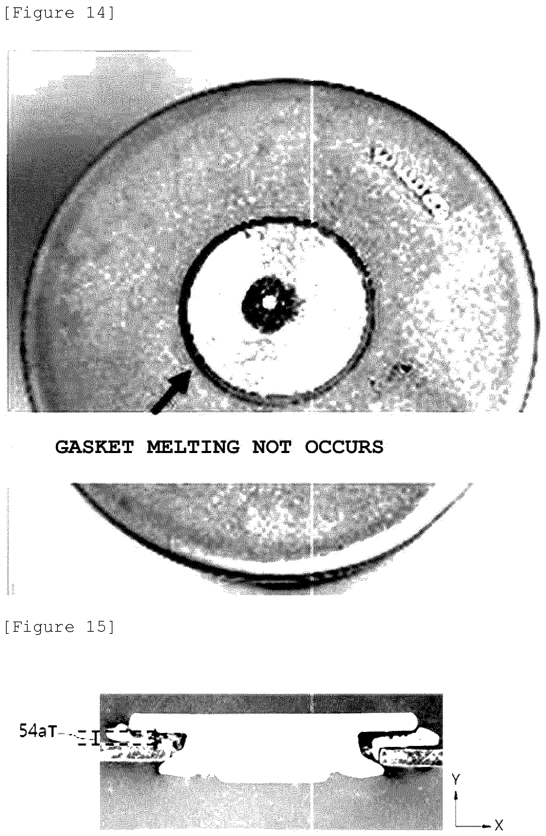

FIG. 15 is a photograph illustrating a cross-section of the riveting structure of the electrode terminal taken along the longitudinal direction Y of the battery cell 201.

Referring to FIG. 15, in the riveting structure of the electrode terminal 50 including the outer gasket portion 54a, the thickness 54aT of the outer gasket portion may be measured by measuring a cross-section of the battery cell 201 including the riveting structure taken in the longitudinal direction Y with a 3D shape measuring device. In this case, the thickness 54aT of the outer gasket portion may be the thickness of the portion measured to have the smallest thickness among the measured thicknesses.

Thickness change rate of the outer gasket portion 54a means a change in the thickness of the outer gasket portion 54a according to temperature and time. In Equation 1, thickness change rate of the outer gasket portion 54a is preferably 10% or less.

In Equation 1, thickness change rate of the outer gasket portion 54a may be 10% or less, 9% or less, 8% or less, 7% or less, 6% or less, or 5% or less. Thickness change rate of the outer gasket portion 54a may be 0% or more, 0.5% or more, 1% or more, 1.5% or more, 2%, 2.5% or more, or 3% or more. When thickness change rate of the outer gasket portion 54a satisfies the above range, the gasket 54 that is not melt in the riveting structure of the electrode terminal is provided to prevent a short circuit between the electrode terminal and the battery can due to the melting of the gasket.

According to another exemplary embodiment not falling under the literal meaning of the claims, there is provided the riveting structure of the electrode terminal in which the gasket 54 contains a fluorine resin. Since the gasket 54 contains a fluorine resin, a change in thickness of the outer gasket portion 54a may be minimized, and a short circuit between the electrode terminal and the battery can caused by the melting of the gasket may be prevented.

According to this exemplary embodiment, the gasket 54 may include the outer gasket portion 54a interposed between the outer flange portion 50b and the outer surface of the bottom; and the inner gasket portion 54b interposed between the inner flange portion 50c and the inner surface of the bottom, and thickness change rate of the outer gasket portion 54a may satisfy Equation 2 below.

$$[\text{Equation 2}]$$

$$0\% \leq [(X1-X2) / X1] \times 100(\%) \leq 10\%$$

In Equation 2, X1 is the thickness of the outer gasket portion at room temperature, and X2 is the thickness of the outer gasket portion when the outer gasket portion is left at 150°C for 10 minutes.

As described above, thickness change rate of the outer gasket portion 54a means the change in the thickness of the outer gasket portion 54a according to the temperature. Since the gasket 54 includes a fluorine resin, a change in thickness of the outer gasket portion 54a may be minimized.

In Equation 2, thickness change rate of the outer gasket portion 54a may be 10% or less, 9.5% or less, 9% or less, 8.5% or less, 8% or less, 7.5% or less, or 7% or less. Thickness change rate of the outer gasket portion 54a may be 0% or more, 1% or more, 2% or more, 3% or more, 4% or more, or 5% or more. When thickness change rate of the outer gasket portion 54a satisfies the above range, the gasket 54 that is not melt in the riveting structure of the electrode terminal is provided to prevent a short circuit between the electrode terminal and the battery can due to the melting of the gasket.

According to the exemplary embodiments according to the present invention subject to the claims, the gasket 54 may include the outer gasket portion 54a interposed between the outer flange portion 50b and the outer surface of the bottom; and the inner gasket portion 54b interposed between the inner flange portion 50c and the inner surface of the bottom, and thickness change rate of the outer gasket portion 54a may satisfy Equation 3 below.

[Equation 3]

$$0\% \leq [(X1-X2) \ / \ X1] \ x \ 100(\%) \ \leq \ 10\%$$

In Equation 3, X1 is the thickness of the outer gasket portion at room temperature, and X2 is the thickness of the outer gasket portion when the outer gasket portion is left at 230°C for 30 minutes.

As described above, thickness change rate of the outer gasket portion 54a means the change in the thickness of the outer gasket portion 54a according to the temperature. Since the gasket 54 includes a fluorine resin, a change in thickness of the outer gasket portion 54a may be minimized.

In Equation 3, thickness change rate of the outer gasket portion 54a may be 10% or less, 9.7% or less, 9.5% or less, 9.3% or less, or 9% or less. Thickness change rate of the outer gasket portion 54a may be 0% or more, 1% or more, 2% or more, 30 or more, 4% or more, 5% or more, 6% or more, or 7% or more. When thickness change rate of the outer gasket portion 54a satisfies the above range, the gasket 54 that is not melt in the riveting structure of the electrode terminal is provided to prevent a short circuit between the electrode terminal and the battery can due to the melting of the gasket.

[Equation 1] to [Equation 3] regarding thickness change rate of the outer gasket portion 54a containing the fluorine resin are different from thickness change rate of the outer gasket portion which does not contain the fluorine resin as illustrated in Table 1 below.

[Table 1]

| Condition | Rate of change in thickness of outer gasket portion | |
|---|---|---|
| | Containing fluorine resin (PFA and the like) | Not-containing fluorine resin (PP and the like) |
| 100°C, 10 mins | < 10%, [Equation 1] | > 30% |
| 150°C, 10 mins | < 10%, [Equation 2] | > 50% |
| 230°C, 30 mins | < 10%, [Equation 3] | > 70% |

Referring to Table 1, [Equation 1] to [Equation 3] relate to the thickness change rate of the outer gasket portion 54a containing the fluorine resin, and the outer gasket portion 54a may contain perfluoroalkoxy (PFA) and polytetrafluoroethylene (PTFE), and the like. When [Equation 1] to [Equation 3] satisfy the above range, the thickness change rate of the outer gasket portion 54a has a small value compared to the thickness change rate of polypropylene (PP) that does not contain a fluorine resin, so that it is possible to provide the gasket 54 that does not melt relatively in the riveting structure of the electrode terminal.

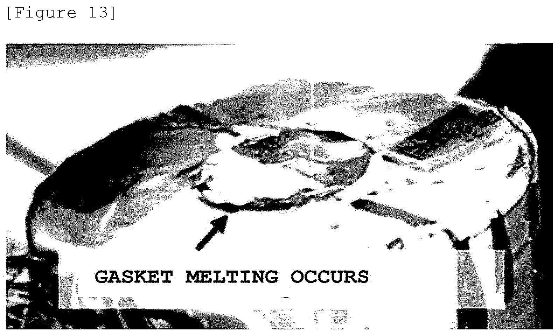

FIG. 13 is a photograph illustrating a phenomenon in which the gasket melts in the riveting structure of the electrode terminal in the case of the gasket in the related art according to the comparative example of the present invention. In the case of the gasket in the related art according to the exemplary embodiment of the present invention, it is observed that the gasket melts because the gasket cannot withstand the high temperature heat generated on the positive electrode terminal side.

FIG. 14 is a photograph illustrating a phenomenon in which a gasket does not melt in the riveting structure of the electrode terminal in the case of a gasket including a fluorine resin according to the exemplary embodiment of the present invention. In the case of the gasket including the fluorine resin according to the exemplary embodiment of the present invention, a phenomenon in which the gasket melts is not observed even between the electrode terminal and the battery can, where high-temperature heat is generated in the battery cell.

According to the exemplary embodiment of the present invention, the gasket 54 may contain a fluorine resin, and the fluorine resin may be made of an elastic polymer resin. For example, the fluorine resin may include one or more selected from the group consisting of perfluoroalkoxy (PFA) and polytetrafluoroethylene (PTFE).

According to the exemplary embodiment of the present invention, the compressive strength of the fluorine resin may be 10 Mpa or more and 20 Mpa or less. The compressive strength of the fluorine resin may be measured by the D695 ASTM test method. The compressive strength of the fluorine resin refers to the maximum stress before destruction when the fluorine resin receives a compressive force in a single direction, for example, force applied to reduce the size of the fluorine resin. The compressive strength is expressed in force per unit area ($N/m^2$ or MPa). The compressive strength, as opposed to tensile strength, is the capacity of a material to withstand a load applied to reduce a size and resist compression.

The compressive strength of the fluorine resin may be 10.5 Mpa or more, 11 Mpa or more, 11.5 Mpa or more, 12 Mpa or more. The compressive strength of the fluorine resin may be 19.5 Mpa or less, 19 Mpa or less, 18.5 Mpa or less, 18 Mpa or less. When the compressive strength of the fluorine resin satisfies the above range, the gasket containing the fluorine resin may be compressed well under high temperature conditions and have elasticity compared to a gasket containing polypropylene (PP) that does not contain a fluorine resin, so that the gasket may have excellent sealing force even when receiving stronger compression force during the manufacturing of the riveting structure of the electrode terminal, thereby preventing electrolyte and gas leakage.

According to the embodiments of the claimed invention, the electrode terminal 50 further includes a flat portion 50d provided at the end of the body portion 50a exposed through the inner surface 52b of the bottom 52 of the battery can 51.

Preferably, the flat portion 50d and the inner surface 52b of the bottom 52 of the battery can 51 may be parallel to each other. Here, 'parallel' means substantially parallel when observed with the naked eye.

According to one aspect, an angle θ between the inner flange portion 50c and the inner surface 52b of the bottom 52 of the battery can 51 may be 0° to 60° or less. A size of the angle may be determined by caulking strength when the electrode terminal 50 is installed in the through-hole 53 of the battery can 51 by a caulking method. In one example, as the caulking strength increases, the angle θ may decrease to 0°. When the angle exceeds 60°, a sealing effect of the gasket 54 may deteriorate.

According to another aspect, a recess portion 55 may be provided between the inner flange portion 50c and the flat portion 50d. The recess portion 55 may have a cross-sectional structure of an asymmetric recess. In one example, the asymmetric recess may be approximately V-shaped. The asymmetric recess may include a lateral wall 55a of the flat portion 50d and an inclined surface 55b of the inner flange portion 50c connected to an end of the lateral wall 55a. The lateral wall 55a may be substantially perpendicular to the inner surface 52b of the bottom 52 of the battery can 51. 'Vertical' means a case that is substantially vertical when observed with the naked eye. The recess portion 55 is formed by the shape of a caulking jig when the electrode terminal 50 is installed in the through-hole 53 of the battery can 51 by the caulking method.

Preferably, the thickness of the inner flange portion 50c may decrease as the distance from the body portion 50a of the electrode terminal 50 increases.

According to the exemplary embodiment of the present invention, the gasket 54 may include the outer gasket portion 54a interposed between the outer flange portion 50b and the outer surface of the bottom; and the inner gasket portion 54b interposed between the inner flange portion 50c and the inner surface of the bottom, and the inner gasket portion 54b and the outer gasket portion 54a may have different thicknesses depending on positions.

According to another aspect, the outer gasket portion 54a and the inner gasket portion 54b may have different thicknesses depending on positions. Preferably, a region interposed between an inner edge 56 of the through-hole 53 connected with the inner surface 52b of the bottom 52 of the battery can 51 and the inner flange portion 50c in the region of the inner gasket portion 54b may have a relatively small thickness. Preferably, a minimum thickness point may exist in the gasket region interposed between the inner edge 56 of the through-hole 53 and the inner flange portion 50c. Further, the inner edge 56 of the through-hole 53 may include a facing surface 57 facing the inner flange portion 50c.

In the meantime, an upper end and a lower end of the inner wall of the through-hole 53 perpendicular to the bottom 52 of the battery can 51 may be corner-cut so as to form a surface tapered toward the electrode terminal 50. However, the upper end and/or the lower end of the inner wall of the through-hole 53 may be transformed into a smooth curved surface having a curvature. In this case, in the vicinity of the upper end and/or the lower end of the inner wall of the through-hole 53, stress applied to the gasket 54 may be more relieved.

According to the exemplary embodiment of the present invention, the gasket 54 may include the outer gasket portion 54a interposed between the outer flange portion 50b and the outer surface of the bottom; and the inner gasket portion 54b interposed between the inner flange portion 50c and the inner surface of the bottom, and the inner gasket portion 54b may extend longer than the inner flange portion 50c. Preferably, the inner gasket portion 54b may be extended longer than the inner flange portion 50c while forming an angle of 0° to 60° with the inner surface 52b of the bottom 52 of the battery can 51.

A height H1 of the flat portion 50d may be equal to or larger than a height H2 of the end of the inner gasket portion 54b based on the inner surface 52b of the bottom 52 of the battery can 51. According to the embodiments of the invention, the height H1 of the flat portion 50d is equal to or larger than a height H3 of the end of the inner flange portion 50c based on the inner surface 52b of the bottom 52 of the battery can 51.

When the height parameters H1, H2, and H3 satisfy the foregoing conditions, the inner flange portion 50c and the inner gasket portion 54b may be prevented from interfering with other components.

In another aspect, a radius R1 from the center of the body portion 50a of the electrode terminal 50 to the edge of the outer flange portion 50b may be 10% to 60% of a radius R2 of the bottom 52 of the battery can 51.

When R1 decreases, a welding space becomes insufficient when an electric wiring component (bus bar) is welded to the electrode terminal 50. In addition, when R1 increases, a welding space is reduced when an electric wiring component (bus bar) is welded to the outer surface 52a of the bottom 52 of the battery can 51 excluding the electrode terminal 50.

When the ratio R1/R2 is adjusted between 10% and 60%, a welding space for the electrode terminal 50 and the outer surface of the bottom 52 of the battery can 51 may be properly secured.

In addition, the radius R3 from the center of the body portion 50a of the electrode terminal 50 to the edge of the flat portion 50d may be 4 to 30% based on the radius R2 of the bottom 52 of the battery can 51.

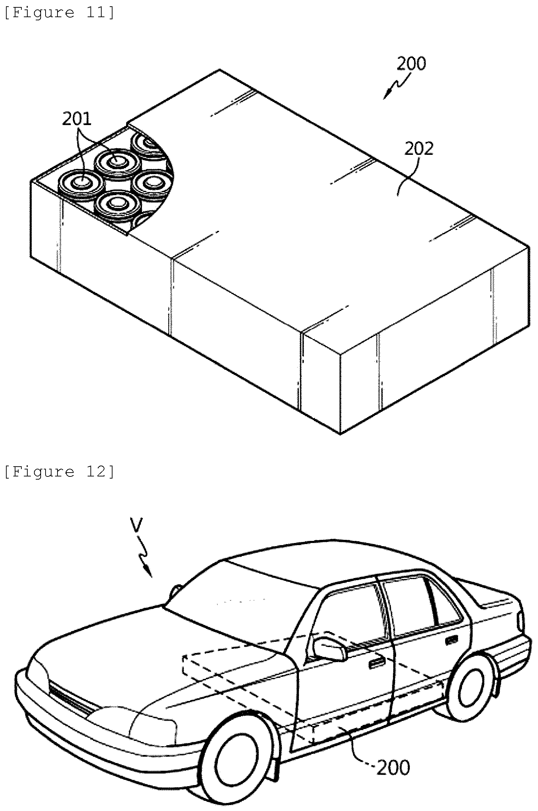

When R3 decreases, the welding space becomes insufficient when the current collecting plate 79 (see FIG. 11) is welded to the flat portion 50d of the electrode terminal 50, and the welding region of the electrode terminal 50 decreases, thereby increasing contact resistance. In addition, R3 needs to be smaller than R1, and when R3 increases, the thickness of the inner flange portion 50c becomes thinner, so that the force of the inner flange portion 50c to compress the gasket 54 is weakened and thus the sealing ability of the gasket 54 may be reduced.

When R3/R2 is adjusted between 4% and 30%, the welding region between the flat portion 50d of the electrode terminal 50 and the current collecting plate 79 (see FIG. 11) is sufficiently secured, so that it is possible to not only easily proceed with the welding process, but also to reduce the contact resistance of the welding region and to prevent deterioration of the sealing ability of the gasket 54.

According to the exemplary embodiment of the present invention, the riveting structure of the electrode terminal 50 may be formed by using a vertically moving caulking jig. First, a preform (not illustrated) of the electrode terminal 50 is inserted by interposing the gasket 54 to the through-hole 53 formed in the bottom 52 of the battery can 51. The preform refers to the electrode terminal before riveting.

Next, the caulking jig is inserted into an inner space of the battery can 51. The caulking jig includes a recess and a protrusion corresponding to the final shape of the electrode terminal 50 on the surface facing the preform in order to form the electrode terminal 50 by riveting the preform.

Next, the preform is transformed to the riveted electrode terminal 50 by moving the caulking jig downward and press-forming the upper portion of the preform.

During the pressing of the preform by the caulking jig, the outer gasket portion 54a interposed between the outer flange portion 50b and the outer surface 52a of the bottom 52 of the battery can 51 is elastically compressed and a thickness of the outer gasket portion 54a is decreased. In addition, as the region of the inner gasket portion 54b interposed between the inner edge 56 of the through-hole 53 and the preform is elastically compressed by the inner flange portion 50c, the thickness is further reduced than other areas. In particular, the region in which the thickness of the inner gasket portion 54b is intensively reduced is indicated by a dotted circle in FIG. 6. Accordingly, the sealing property between the riveted electrode terminal 50 and the battery can 51 are remarkably improved.

Preferably, the gasket 54 is compressed sufficiently to ensure a desired sealing strength without being physically damaged during riveting of the preform.

In the example, when the gasket 54 is formed of polyfluoroethylene, the gasket 54 preferably has a compression ratio of 60% or more at the point where the gasket 54 is compressed to a minimum thickness. The compression ratio is a ratio of the thickness change before and after the compression to the thickness before compression.

Preferably, the press-forming of the upper portion of the preform may be performed in stages by performing the vertical movement of the caulking jig at least twice or more. That is, the preform may be transformed several times by press-forming the preform in stages. In this case, the pressure applied to the caulking jig may increase in stages. In this case, stress applied to the preform is distributed several times, it is possible to prevent the gasket 54 from being damaged during the caulking process. In particular, when the region of the inner gasket portion 54b interposed between the inner edge 56 of the through-hole 53 and the preform is intensively compressed by the inner flange portion 50c, damage to the gasket is minimized.

When the caulking jig is separated from the battery can 51 after the pressure forming of the preform by using the caulking jig is completed, the riveting structure of the electrode terminal 50 according to the exemplary embodiment of the present invention may be obtained as illustrated in FIG. 6.

According to the exemplary embodiment, the caulking jig presses and forms the upper portion of the preform through vertical movement inside the battery can 51. Depending on the case, a rotary rotating jig used in the related art may be used for press-forming the preform.

However, the rotary rotating jig rotates in a state inclined at a predetermined angle with respect to the central axis of the battery can 51. Accordingly, the rotary rotating jig having a large rotation radius may interfere with the inner wall of the battery can 51. In addition, when the depth of the battery can 51 is large, the length of the rotary jig is increased as much as the depth. In this case, as the rotation radius of the end of the rotary rotating jig increases, the pressure forming of the preform may not be properly performed. Therefore, the pressure forming using the caulking jig is more effective than a method using the rotary rotating jig.

The riveting structure of the electrode terminal 50 according to the exemplary embodiment of the present invention is applicable to a battery cell.

In one example, the battery cell may include the battery can 51. The battery can may have a cylindrical shape. The size of the battery can may be diameters of the circles at both ends of 30 mm to 55 mm, and a height of 60 mm to 120 mm.

Preferably, the diameter of the circle x height of the cylindrical battery can may be 46 mm x 60 mm, 46 mm x 80 mm, 46 mm x 90 mm, or 46 mm x 120 mm.

Preferably, the cylindrical battery cell may be, for example, a cylindrical battery cell in which the ratio of the form factor (defined as a value obtained by dividing the diameter of the cylindrical battery cell by the height, that is, the ratio of the diameter Φ to the height H) is greater than approximately 0.4.

Herein, the form factor means a value representing the diameter and the height of the cylindrical battery cell. The cylindrical battery cell according to the exemplary embodiment of the present invention may be, for example, 46110 cell, 48750 cell, 48110 cell, 48800 cell, 46800 cell, and 46900 cell. In the numerical value representing the form factor, the first two numbers indicate the diameter of the cell, the next two numbers indicate the height of the cell, and the last number 0 indicates that the cell has a circular cross section.

The battery cell according to the exemplary embodiment of the present invention may be a cylindrical battery cell having a substantially cylindrical shape, and having a diameter of about 46 mm, a height of about 110 mm, and a form factor ratio of 0.418.

The battery cell according to another exemplary embodiment may be a cylindrical battery cell having a substantially cylindrical shape, and having a diameter of about 48 mm, a height of about 75 mm, and a form factor ratio of 0.640.

The battery cell according to another exemplary embodiment of the present invention may be a cylindrical battery cell having a substantially cylindrical shape, and having a diameter of about 48 mm, a height of about 110 mm, and a form factor ratio of 0.418.

The battery cell according to another exemplary embodiment of the present invention may be a cylindrical battery cell having a substantially cylindrical shape, and having a diameter of about 48 mm, a height of about 80 mm, and a form factor ratio of 0.600.

The battery cell according to another exemplary embodiment of the present invention may be a cylindrical battery cell having a substantially cylindrical shape, and having a diameter of about 46 mm, a height of about 80 mm, and a form factor ratio of 0.575.

A battery cell according to another exemplary embodiment of the present invention may be a cylindrical battery cell having a substantially cylindrical shape, a diameter of about 46 mm, a height of about 90 mm, and a form factor ratio of 0.511.

In the related art, the battery cells having the ratio of the form factor of about 0.4 or less have been used. That is, in the related art, for example, the 18650 cell, the 21700 cell, and the like are used. The 18650 cell has a diameter of about 18 mm, a height of about 65 mm, and a form factor ratio of 0.277. The 21700 cell has a diameter of about 21 mm, a height of about 70 mm, and a form factor ratio of 0.300.

An exemplary embodiment of the present invention provides a battery cell including: an electrode assembly in which sheet-shaped first electrode plate and second electrode plate are wound with a separation membrane interposed therebetween, and which includes an uncoated portion of the first electrode plate and an uncoated portion of the second electrode plate, which are extended and exposed from both ends; the riveting structure of the electrode terminal according to the above-described exemplary embodiment; and a sealing body, in which the electrode assembly is accommodated in the battery can, the first electrode plate and the battery can are electrically connected, the second electrode plate and the electrode terminal are electrically connected, and the sealing body seals the open end of the battery can to be insulated from the battery can.

According to the exemplary embodiment of the present invention, in the battery cell, the battery can includes a beading portion press-fitted to the inside of the battery can in a region adjacent to the open end, the sealing body includes a non-polar cap plate and a sealing gasket interposed between an edge of the cap plate and the open end of the battery can, and the battery can includes a crimping portion which extends and is bent inside the battery can to surround and fix the edge of the cap plate together with the sealing gasket.

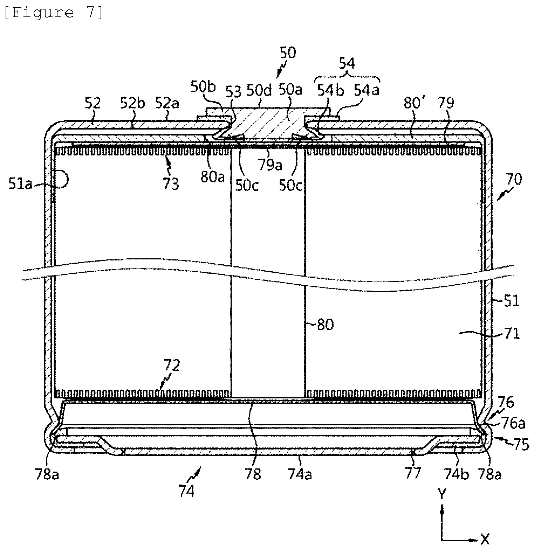

FIG. 7 is a cross-sectional view of a battery cell 70 according to the exemplary embodiment of the present invention taken along the longitudinal direction Y.

Referring to FIG. 7, the battery cell 70 according to the exemplary embodiment includes an electrode assembly 71, in which a sheet-shaped first electrode plate and second electrode plate are wound with a separation membrane interposed therebetween, and which includes an uncoated portion 72 of the first electrode and an uncoated portion 73 of the second electrode plate extending from both ends and exposed.

In the exemplary embodiment, the first electrode plate may be a negative electrode plate and the second electrode plate may be a positive electrode plate. The opposite case thereof is also possible as a matter of course.

The winding method of the electrode assembly 71 is substantially the same as the winding method of the electrode assembly used in manufacturing the tab-less battery cell according to the related art described with reference to FIG. 2.

In the illustration of the electrode assembly 71, only the uncoated portions 72 and 73 that are exposed and extended to the outside of the separation membrane are illustrated in detail, and the winding structure of the first electrode plate, the second electrode plate, and the separation membrane is omitted.

The battery cell 70 also includes the battery can 51 which accommodates the electrode assembly 71 and is electrically connected with the uncoated portion 72 of the first electrode plate.

Preferably, one side (lower portion) of the battery can 51 is opened. Further, the bottom 52 of the battery can 51 has a structure in which the electrode terminal 50 is riveted to the through hole 53 through a caulking process.

Further, the battery cell 70 may include the gasket 54 provided between the electrode terminal 50 and the outer diameter of the through-hole 53.

The battery cell 70 may include the sealing body 74 sealing the opened end of the battery can 51 so as to be insulated from the battery can 51. Preferably, the sealing body 74 may include a cap plate 74a having no polarity and a sealing gasket 74b interposed between an edge of the cap plate 74a and the opened end of the battery can 51.

The cap plate 74a may be made of a conductive metal material, such as aluminum, steel, or nickel. Further, the sealing gasket 74b may be made of polypropylene, polybutylene terephthalate, polyethylene fluoride, or the like having insulating property and elasticity. However, the present invention is not limited by the materials of the cap plate 74a and the sealing gasket 74b.

The cap plate 74a may include a vent notch 77 that ruptures when the pressure inside the battery can 51 exceeds a threshold. The vent notch 77 may be formed on both surfaces of the cap plate 74a. The vent notches 77 may form a continuous or discontinuous circular pattern, a straight pattern, or any other pattern on the surface of the cap plate 74a.

The battery can 51 may include a crimping portion 75 extended and bent toward the inside of the battery can 51 to surround and fix the edge of the cap plate 74a together with the sealing gasket 74b in order to fix the sealing body 74.

The battery can 51 may also include a beading portion 76 pressed into the inside of the battery can 51 in a region adjacent the opened end. The beading portion 76 supports the edge of the sealing body 74, in particular, the outer peripheral surface of the sealing gasket 74b, when the sealing body 74 is fixed by the crimping portion 75.

The battery cell 70 may further include a first current collecting plate 78 welded to the uncoated portion 72 of the first electrode plate. The first current collecting plate 78 is made of a conductive metal material, such as aluminum, steel, or nickel. Preferably, at least a portion 78a of an edge of the first current collecting plate 78 that is not in contact with the uncoated portion 72 of the first electrode plate may be interposed between the beading portion 76 and the sealing gasket 74b and fixed by the crimping portion 75. Optionally, at least a portion 78a of the edge of the first current collecting plate 78 may be fixed through the welding to an inner peripheral surface 76a of the beading portion 76 adjacent to the crimping portion 75.

The battery cell 70 may also include the second current collecting plate 79 welded to the uncoated portion 73 of the second electrode plate. Preferably, at least a portion of the second current collecting plate 79, for example, the center portion 79a, may be welded to the flat portion 50a of the electrode terminal 50.

Preferably, when the second current collecting plate 79 is welded, the welding tool is inserted through the winding center 80 present in the core of the electrode assembly 71 to reach the welding point of the second current collecting plate 79. In addition, when the second current collecting plate 79 is welded to the flat portion 50d of the electrode terminal 50, the electrode terminal 50 supports the welding region of the second current collecting plate 79, so that a strong pressure is applied to the welding region to improve the welding quality. In addition, since the flat portion 50d of the electrode terminal 50 has a large area, a wide welding region may also be secured. Accordingly, it is possible to lower the internal resistance of the battery cell 70 by lowering the contact resistance of the welding region. The face-to-face welding structure of the riveted electrode terminal 50 and the second current collecting plate 79 is very useful for rapid charging using a high c-rate current. This is because the current density per unit area may be lowered in the cross section in the direction in which the current flows, so that the amount of heat generated in the current path may be lower than that of the related art.

When the flat portion 50d of the electrode terminal 50 is welded to the second current collecting plate 79, any one of laser welding, ultrasonic welding, spot welding, and resistance welding may be used. The area of the flat portion 50d may be adjusted differently depending on the welding method, but is preferably 2 mm or more for welding strength and ease of the welding process.

In one example, when the flat portion 50d and the second current collecting plate 79 are welded with a laser and are welded in a continuous or discontinuous line in the form of a circular pattern, the diameter of the flat portion 50d is preferably 4 mm or more. When the diameter of the flat portion 50d satisfies the corresponding conditions, it is possible to secure welding strength, and there is no difficulty in proceeding with the welding process by inserting the laser welding tool into the winding center 80 of the electrode assembly 71.

In another example, when the flat portion 50d and the second current collecting plate 79 are ultrasonically welded and are welded in a circular pattern, the diameter of the flat portion 50d is preferably 2 mm or more. When the diameter of the flat portion 50d satisfies the corresponding conditions, it is possible to secure welding strength, and there is no difficulty in proceeding with the welding process by inserting the ultrasonic welding tool into the winding center 80 of the electrode assembly 71.

The battery cell 70 may further include an insulating cap 80'. The insulating cap 80' may be interposed between the second current collecting plate 79 and the inner surface 52b of the bottom 52 of the battery can 51, and the inner peripheral surface 51a of the lateral wall of the battery can 51 and the electrode assembly 71. Preferably, the insulating cap 80' includes a welding hole 80a exposing the flat portion 50d of the electrode terminal 50 toward the second current collecting plate 79, and may cover the surface of the second current collecting plate 79 and one (upper portion) edge of the electrode assembly 71.

Preferably, the uncoated portions 72 and 73 of the first electrode plate and/or the second electrode plate are bent from the outer periphery side of the electrode assembly 71 to the core side to form curved surfaces on the upper and lower portions of the electrode assembly 71. In addition, the first current collecting plate 78 may be welded to the curved surface formed while the uncoated portion 72 of the first electrode plate is bent, and the second current collecting plate 79 may be welded to the curved surface formed while the uncoated portion 73 of the second electrode plate is bent.

In order to relieve stress generated when the uncoated portions 72 and 73 are bent, the first electrode plate and/or the second electrode plate may have an improved structure different from that of the electrode plate in the related art (refer to FIG. 1).

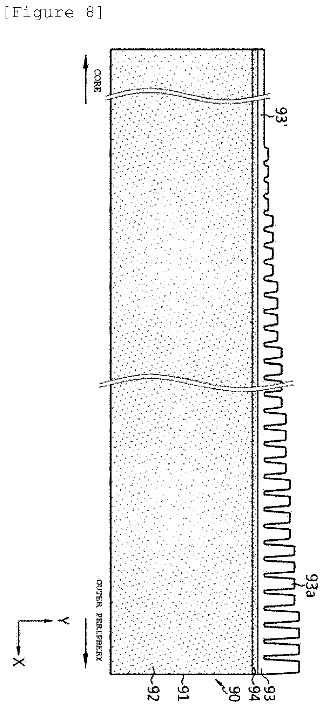

FIG. 8 is a top plan view illustrating an example of the electrode plate 90 structure according to the exemplary embodiment of the present invention.

Referring to FIG. 8, the electrode plate 90 includes a sheet-shaped current collector 91 made of a foil of a conductive material, an active material layer 92 formed on at least one surface of the current collector 91, and an uncoated portion 93, which is not coated with an active material, formed on a long side end of the current collector 91.

Preferably, the uncoated portion 93 may include a plurality of notching-processed segment pieces 93a. The plurality of segment pieces 93a form a plurality of groups, and the segment pieces 93a belonging to each group may have the same height (length in the Y direction) and/or width (length in the X direction) and/or spacing pitch. The number of segment pieces 93a belonging to each group may be increased or decreased than illustrated. The segment piece 93a may have a trapezoidal shape, and may be transformed into a quadrangular shape, a flat quadrilateral shape, a semi-circular shape, or a semi-elliptical shape.

Preferably, the height of the segment piece 93a may be increased step by step from the core side to the outer peripheral side. Also, a core-side uncoated portion 93' adjacent to the core side may not include the segment piece 93a, and the height of the core-side uncoated portion 93' may be smaller than those of other uncoated portion regions.

Optionally, the electrode plate 90 may include an insulating coating layer 94 covering the boundary between the active material layer 92 and the uncoated portion 93. The insulating coating layer 94 includes an insulating polymer resin, and may optionally further include an inorganic filler. The insulating coating layer 94 prevents the end of the active material layer 92 from coming into contact with the active material layer having a facing opposite polarity through the separation membrane, and serves to structurally support the bending of the segment piece 93a. To this end, when the electrode plate 90 is wound as the electrode assembly, it is preferable that at least a portion of the insulating coating layer 94 is exposed to the outside from the separation membrane.

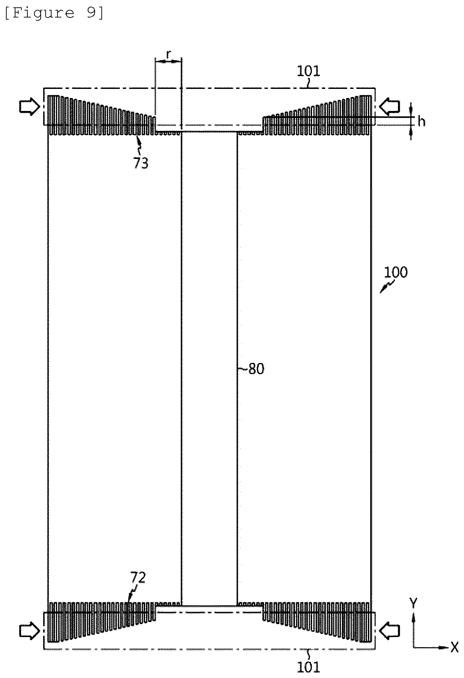

FIG. 9 is a cross-sectional view of the electrode assembly 100 in which an uncoated portion segmental structure of the electrode plate 90 is applied to a first electrode plate and a second electrode plate taken in the longitudinal direction Y according to the exemplary embodiment of the present invention.

Referring to FIG. 9, the electrode assembly 100 may be manufactured by the winding method described with reference to FIG. 2. For convenience of description, the protrusion structure of the uncoated portions 72 and 73 extending outside the separation membrane will be illustrated in detail, and the winding structure of the first electrode plate, the second electrode plate, and the separation membrane will be omitted. The uncoated portion 72 protruding downwardly extends from the first electrode plate, and the uncoated portion 73 protruding upwardly extends from the second electrode plate.

A pattern in which the heights of the uncoated portions 72 and 73 change is schematically illustrated. That is, the heights of the uncoated portions 72 and 73 may vary irregularly depending on the position at which the cross-section is cut. For example, when the side portion of the trapezoidal segment piece 93a is cut, the height of the uncoated portion in the cross section is smaller than the height of the segment piece 93a. Therefore, it should be understood that the heights of the uncoated portions 72 and 73 illustrated in the drawing illustrating the cross-section of the electrode assembly 100 correspond to the average of the heights of the uncoated portions included in each winding turn.

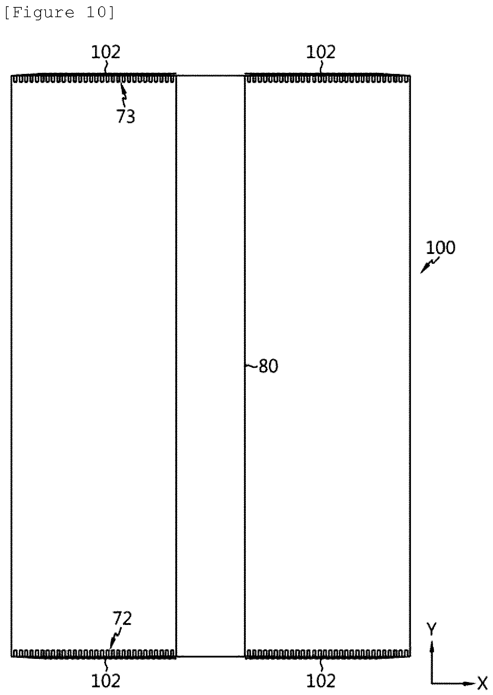

The uncoated portions 72 and 73 may be bent from the outer peripheral side of the electrode assembly 100 toward the core side as illustrated in FIG. 10. In FIG. 9, the bent portion 101 is indicated by a dotted line box. When the uncoated portions 72 and 73 are bent, curved surfaces 102 are formed on the upper and lower portions of the electrode assembly 100 while radially adjacent segment pieces overlap each other in multiple layers. At this time, the core-side uncoated portion 93' in FIG. 8 is not bent due to the low height, and the height h of the innermost bent segment piece is less than or equal to the radial length r of the winding region formed by the core-side uncoated portion 93' having no segment piece structure. Accordingly, the winding center 80 in the core of the electrode assembly 100 is not closed by the bent segment pieces. When the winding center 80 is not closed, there is no difficulty in the electrolyte injection process, and the electrolyte injection efficiency is improved. In addition, by inserting a welding tool through the winding center 80, the electrode terminal 50 and the second current collecting plate 79 may be easily welded.

In the battery cell 70 according to the exemplary embodiment of the present invention, the cap plate 74a of the sealing body 74 has no polarity. Instead, the first current collecting plate 78 is connected to the lateral wall of the battery can 51, so that the outer surface 52a of the bottom 52 of the battery can 51 has a polarity opposite to that of the electrode terminal 50. Accordingly, when a plurality of cells is to be connected in series and/or in parallel, wiring, such as a bus bar connection, may be performed on the upper portion of the battery cell 70 using the outer surface 52a of the bottom 52 of the battery can 51 and the electrode terminal 50. Through this, the energy density can be improved by increasing the number of cells that may be mounted in the same space.

In the present invention, the positive electrode active material coated on the positive electrode plate and the negative electrode active material coated on the negative electrode plate may be used without limitation as long as the active material is known in the art.

In one example, the positive electrode active material may include an alkali metal compound represented by the general chemical formula $A[A_xM_y]O_{2+z}$ (A includes at least one element among Li, Na, and K; M includes at least one element selected from Ni, Co, Mn, Ca, Mg, Al, Ti, Si, Fe, Mo, V, Zr, Zn, Cu, Al, Mo, Sc, Zr, Ru, and Cr; $x \geq 0$, $1 \leq x+y \leq 2$, $-0.1 \leq z \leq 2$; the stoichiometric modulus of the elements contained in x, y, z and M are chosen such that the compound remains electrically neutral).

In another example, the positive electrode active material may be the alkali metal compound $xLiM^1O_2$-$(1-x)$ $Li_2M^2O_3$ ($M^1$ includes at least one element having an average oxidation state 3; $M^2$ includes at least one element having an average oxidation state 4; $0 \leq x \leq 1$) disclosed in Patents US6,677,082, US6,680,143, and the like.

In another example, the positive electrode active material may be lithium metal phosphate represented by the general chemical formula $LiaM^1xFe_{1-x}M^2yP_1-yM^3zO_{4-z}$ ($M^1$ includes at least one element selected from Ti, Si, Mn, Co, Fe, V, Cr, Mo, Ni, Nd, Al, Mg, and Al; $M^2$ includes at least one element selected from Ti, Si, Mn, Co, Fe, V, Cr, Mo, Ni, Nd, Al, Mg, Al, As, Sb, Si, Ge, V, and S; $M^3$ includes a halogen-group element selectively including F; $0 < a \leq 2$, $0 \leq x \leq 1$, $0 \leq y < 1$, $0 \leq z < 1$; the stoichiometric modulus of the elements contained in a, x, y, z, $M^1$, $M^2$, and $M^3$ are chosen such that the compound remains electrically neutral), or $Li_3M_2(PO_4)_3$ (M includes at least one element selected from Ti, Si, Mn, Fe, Co, V, Cr, Mo, Ni, Al, Mg, and Al).

Preferably, the positive electrode active material may include primary particles and/or secondary particles in which the primary particles are aggregated.

In one example, the negative electrode active material may be a carbon material, lithium metal or lithium metal compound, silicon or silicon compound, tin or tin compound. Metal oxides, such as $TiO_2$ and $SnO_2$, with a potential of less than 2V may also be used as the negative electrode active material. As the carbon material, low crystalline carbon, high crystalline carbon, and the like may all be used.

As the separation membrane, for example, a porous polymer film made of a polyolefin-based polymer, such as an ethylene homopolymer, a propylene homopolymer, an ethylene/butene copolymer, an ethylene/hexene copolymer, or an ethylene/methacrylate copolymer may be used solely or in a lamination form. As another example, the separation membrane may be a typical porous nonwoven fabric, for example, a nonwoven fabric made of high melting point glass fiber, polyethylene terephthalate fiber, or the like.

At least one surface of the separation membrane may include a coating layer of inorganic particles.

Further, it is also possible that the separation membrane itself is made of a coating layer of inorganic particles. The particles constituting the coating layer may have a structure bound to a binder so that an interstitial volume exists between adjacent particles.

The inorganic particles may be made of an inorganic material having a dielectric constant of 5 or more. As a non-limited example, the inorganic particle may include at least one material selected from the group consisting of $Pb(Zr,Ti)O_3$ (PZT), $Pb_{1-x}La_xZr_{1-y}Ti_yO_3$(PLZT), $PB(Mg_3Nb_{2/3})O_3$-$PbTiO_3$(PMN-PT), $BaTiO_3$, hafnia ($HfO_2$), $SrTiO_3$, $TiO_2$, $Al_2O_3$, $ZrO_2$, $SnO_2$, $CeO_2$, MgO, CaO, ZnO, and $Y_2O_3$.

The electrolyte may be a salt having a structure, such as $A^+B^-$. Herein, $A^+$ includes an ion composed of an alkali metal positive ion, such as $Li^+$, $Na^+$, and $K^+$, or a combination thereof. Further, $B^-$ includes one or more negative ions selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $BF_2C_2O_4^-$, $BC_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$.

Further, the electrolyte may be dissolved in an organic solvent and used. As the organic solvent, propylene carbonate (PC), ethylenecarbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), and ybutyrolactone, or a mixture thereof may be used.

The cylindrical battery cell according to the exemplary embodiment of the present invention may be used for manufacturing the battery pack.

FIG. 11 is a diagram illustrating a schematic configuration of a battery pack according to an exemplary embodiment of the present invention.

Referring to FIG. 11, a battery pack 200 according to the exemplary embodiment of the present invention includes an assembly in which the cylindrical battery cells 201 are electrically connected and a pack housing 202 accommodating the assembly. The cylindrical battery cell 201 is the battery cell according to the exemplary embodiment. In the drawings, components, such as a bus bar, a cooling unit, and an external terminal, for electrical connection of the cylindrical battery cells 201 are omitted for convenience of illustration.

The battery pack 200 may be mounted to the vehicle. An example of the vehicle includes an electric vehicle, a hybrid vehicle, or a plug-in hybrid vehicle. The vehicle includes a four-wheeled vehicle or a two-wheeled vehicle.

FIG. 12 is a diagram illustrating a vehicle including the battery pack 200 of FIG. 11.

Referring to FIG. 12, a vehicle V according to the exemplary embodiment of the present invention includes a battery pack 200 according to the exemplary embodiment of the present invention. The vehicle V is operated by receiving power from the battery pack 200 according to the exemplary embodiment of the present invention.

Example

Example 1

(1) Manufacture a riveting structure of an electrode terminal

One side of a battery can (diameter: 45 mm to 47 mm, material: steel) was opened, and an electrode terminal riveted to a through hole formed in the bottom of the battery can by a caulking process were used.

In the riveting structure of the electrode terminal including the riveted electrode terminal, the electrode terminal includes: a body portion inserted into the through hole; an outer flange portion exposed through the outer surface of the bottom; and an inner flange portion exposed through the inner surface of the bottom, and the riveting structure of the electrode terminal was manufactured by providing a gasket including perfluoroalkoxy (PFA) between the electrode terminal and the outer diameter of the through hole. The outer diameter of the gasket was 16 mm, and the thickness of the outer gasket portion interposed between the outer flange portion and the outer surface of the bottom was 0.5 mm.

**(2) Manufacture a battery cell**

An electrode assembly was manufactured by sequentially stacking and winding a sheet-shaped negative electrode, polyethylene separation membrane, and positive electrode. After inserting the wound electrode assembly into the battery can including the riveting structure of the electrode terminal, an electrolyte was injected, and the cylindrical battery can was sealed with a sealing body to manufacture a battery cell.

In this case, the battery cell was manufactured so that the negative electrode plate of the electrode assembly and the battery can were electrically connected, the positive electrode plate and the electrode terminal were electrically connected, and the sealing body was insulated from the battery can.

**Comparative Example 1**

Except that in the riveting structure of the electrode terminal, a gasket containing polypropylene (PP) was provided between the electrode terminal and the outer diameter of the through hole, an electrode terminal including a riveting structure and a battery cell including the same were manufactured in the same manner as in Example 1.

**Experimental Example**

Experimental Example 1. Measurement of rate of change in thickness of the outer gasket portion

The thickness change rate of the outer gasket portion was calculated from the difference between a thickness X1 of the outer gasket portion at room temperature and a thickness X2 of the outer gasket portion at a higher temperature than room temperature by measuring the thickness X1 of the outer gasket portion at room temperature (23°C), and then measuring the thickness X2 of the outer gasket portion again after leaving the outer gasket portion at 100°C for 10 minutes.

The formula for calculating the thickness change rate of the outer gasket portion is as follows.

Thickness change rate (%) of outer gasket portion = $[(X1 - X2)/X1] \times 100$

In the formula for calculating the thickness change rate of the outer gasket portion, the thickness change rate of the outer gasket portion was calculated by measuring the thickness X2 of the outer gasket portion after leaving the outer gasket portion at 150 °C for 10 minutes, and the thickness X2 of the outer gasket portion again after leaving the outer gasket portion at 230°C for 30 minutes.

At each temperature and time condition, the measurement values of the thickness X1 of the outer gasket portion at room temperature and the thickness X2 of the outer gasket portion at the temperature higher than room temperature are represented in Table **2.**

The thicknesses X1 and X2 of the outer gasket portions were measured by using a 3D shape measuring device (Keyence shape measuring device, Model name: Keyence Korea VR5000). In this case, the thicknesses X1 and X2 of the outer gasket portion were described with average values obtained by measuring three times the portion 54aT where the thicknesses X1 and X3 of the outer gasket portion were measured the smallest in the image obtained by photographing the cross-section of the battery cell including the outer gasket portion cut in the longitudinal direction Y through the 3D shape measuring device. The battery cells were cut by using a molding device, a polishing device (model name: Tegramin-30) for polishing a cell, and a grinder for cutting the battery cell from the end diameter of the battery cell in the longitudinal direction **Y.**

[Table 2]

| Condition | Thickness of outer gasket portion (mm) | | | |
|---|---|---|---|---|
| | Example 1 | | Comparative Example 1 | |
| | X1 | X2 | X1 | X2 |
| 100°C / 10 mins | 0.5 mm | 0.478 mm | 0.5 mm | 0.336 mm |
| 150 °C / 10 mins | 0.5 mm | 0.467 mm | 0.5 mm | 0.236 mm |
| 230°C / 30 mins | 0.5 mm | 0.456 mm | 0.5 mm | 0.120 mm |

The thickness change rate of the outer gasket portion was calculated from the value of the thickness X1 of the outer gasket portion measured at room temperature and the value of the thickness X2 of the outer gasket portion measured at the higher temperature than the room temperature, and is illustrated in Table 3.

[Table 3]

| Condition | Thickness change rate (%) of outer gasket portion | |
|---|---|---|
| | Example 1 | Comparative Example 1 |
| 100°C / 10 mins | 4.4% | 32.8% |
| 150 °C / 10 mins | 6.6% | 52.8% |
| 230°C / 30 mins | 8.8% | 76.0% |

Referring to Tables 2 and 3, since the thickness change rate of the outer gasket portion including the fluorine resin satisfies the range of 10% or less, it can be seen that the thickness change rate of the outer gasket portion of the gasket containing perfluoroalkoxy (PFA) has a smaller value than that of the thickness change rate of the outer gasket portion of the gasket containing polypropylene (PP), and thus, the gasket 54 that is not melt in the riveting structure of the electrode terminal is provided to prevent a short circuit between the electrode terminal and the battery can due to the melting of the gasket.

**Claims**

1.  A riveting structure of an electrode terminal (50), comprising:

    a battery can (51) with one side open;
    an electrode terminal (50) riveted through a through-hole (53) formed in a bottom (52) of the battery can (51); and
    a gasket (54) provided between the electrode terminal (50) and an outer diameter of the through hole (53),
    wherein the electrode terminal (50) includes:

       a body portion (50a) inserted into the through hole (53);
       an outer flange portion (50b) extending along an outer surface (52a) from a circumference of one side of the body portion (50a) exposed through the outer surface (52a) of the bottom (52); and

an inner flange portion (50c) extending toward an inner surface (52b) from a circumference of the other side of the body portion (50a) exposed through the inner surface (52b) of the bottom (52), and

a flat portion (50d) provided at an end of the body portion (50a) exposed through the inner surface (52b) of the bottom (52);

wherein the gasket (54) includes a fluorine resin,
wherein the gasket (54) further includes:

an outer gasket portion (54a) interposed between the outer flange portion (50b) and the outer surface (52a) of the bottom (52); and

an inner gasket portion (54b) interposed between the inner flange portion (50c) and the inner surface (52b) of the bottom (52),

wherein a height (H1) of the flat portion (50d) is larger than a height (H3) of the end of the inner flange portion (50c) based on the inner surface (52b) of the bottom (52); and

wherein the thickness change rate of the outer gasket portion (54a) satisfies the following equation,

$$0\% \leq [(X1 - X2) / X1] \cdot 100(\%) \leq 10\%$$

where X1 is the thickness of the outer gasket portion (54a) at room temperature, and X2 is the thickness of the outer gasket portion (54a) when the outer gasket portion (54a) is left at 230°C for 30 minutes.

2. The riveting structure of claim 1, wherein a melting point of the fluorine resin is 280°C or higher.

3. The riveting structure of claim 1, wherein the fluorine resin includes one or more selected from the group consisting of perfluoroalkoxy, PFA, and polytetrafluoroethylene, PTFE.

4. The riveting structure of one of claims 1 to 3, wherein a recess portion (55) is provided between the inner flange portion (50c) and the flat portion (50d).

5. The riveting structure of claim 1, wherein the thickness of the inner flange portion (50c) decreases as a distance from the body portion (50a) increases.

6. The riveting structure of claim 1, wherein the gasket (54) includes:

an outer gasket portion (54a) interposed between the outer flange portion (50b) and the outer surface (52a) of the bottom (52); and

an inner gasket portion (54b) interposed between the inner flange portion (50c) and the inner surface (52b) of the bottom (52), and

the inner gasket portion (54b) and the outer gasket portion (54a) have different thicknesses depending on positions.

7. The riveting structure of claim 6, wherein a region interposed between an inner edge (56) of the through-hole (53) connected with the inner surface (52b) of the bottom (52) and the inner flange portion (50c) in the region of the inner gasket portion (54b) has a relatively smaller thickness than other regions.

8. The riveting structure of claim 1, wherein the gasket (54) includes:

an outer gasket portion (54a) interposed between the outer flange portion (50b) and the outer surface (52a) of the bottom (52); and

an inner gasket portion (54b) interposed between the inner flange portion (50c) and the inner surface (52b) of the bottom (52), and

the inner gasket portion (54b) extends longer than the inner flange portion (50c).

9. The riveting structure of claim 1, wherein a radius from a center (80) of the body portion (50a) to an edge of the outer flange portion (50b) is 10% to 60% of a radius of the bottom (52).

10. A battery cell (70), comprising:

an electrode assembly (71, 100) in which sheet-shaped first electrode plate and second electrode plate are wound with a separation membrane (12) interposed therebetween, and which includes an uncoated portion (10a, 11a, 22, 72, 73, 93) of the first electrode plate and an uncoated portion (10a, 11a, 22, 72, 73, 93) of the second electrode plate, which are extended and exposed from both ends;

the riveting structure of the electrode terminal (50) according to one of claims 1 to 9; and

a sealing body (74),

wherein the electrode assembly (71, 100) is accommodated in the battery can (51), the first electrode plate and the battery can (51) are electrically connected, the second electrode plate and the electrode terminal (50) are electrically connected, and

the sealing body (74) seals the open end of the battery can (51) to be insulated from the battery can (51).

11. The battery cell (70) of claim 10, wherein the battery can (51) includes a beading portion (76) press-fitted to the inside of the battery can (51) in a region adjacent to the open end,

the sealing body (74) includes a non-polar cap plate and a sealing gasket (74b) interposed between an edge of the cap plate (74a) and the open end of the battery can (51), and

the battery can (51) includes a crimping portion (75) which extends and is bent inside the battery can (51) to surround and fix the edge of the cap plate (74a) together with the sealing gasket (74b).

12. The battery cell (70) of claim 10 or 11, further comprising:

a second current collecting plate (79) welded to the uncoated portion (10a, 11a, 22, 72, 73, 93) of the second electrode plate,

at least a portion of the second current collecting plate (79) is welded to the flat portion (50d) of the electrode terminal (50).

13. The battery cell (70) of claim 12, further comprising:

an insulating cap (80') interposed between the second current collecting plate (79) and the inner peripheral surface (51a, 76a) of the bottom (52) of the battery can (51), and between an inner peripheral surface (51a, 76a) of a lateral wall (55a) of the battery can (51) and the electrode assembly (71, 100),

wherein the insulating cap (80') includes a welding hole (80a) exposing the flat portion (50d) of the electrode terminal (50) toward the second current collecting plate (79), and covers a surface of the second current collecting plate (79) and an edge of one side of the electrode assembly (71, 100).

14. A battery pack (200) including at least one battery cell (70) according to one of claims 10 to 13.

15. A vehicle including at least one battery pack (200) according to claim 14.

**Patentansprüche**

1. Nietstruktur eines Elektrodenanschlusses (50), umfassend:

ein Batteriegehäuse (51) mit einer offenen Seite;

einen Elektrodenanschluss (50), der durch ein Durchgangsloch (53) genietet ist, das in einem Boden (52) des Batteriegehäuses (51) ausgebildet ist; und

eine Dichtung (54), die zwischen dem Elektrodenanschluss (50) und einem Außendurchmesser des Durchgangslochs (53) vorgesehen ist,

wobei der Elektrodenanschluss (50) umfasst:

einen Körperabschnitt (50a), der in das Durchgangsloch (53) eingesetzt ist;

einen äußeren Flanschabschnitt (50b), der sich von einem Umfang einer Seite des Körperabschnitts (50a), der durch die Außenfläche (52a) des Bodens (52) freiliegt, entlang einer Außenfläche (52a) erstreckt; und

einen inneren Flanschabschnitt (50c), der sich von einem Umfang der anderen Seite des Körperabschnitts (50a), der durch die Innenfläche (52b) des Bodens (52) freiliegt, in Richtung einer Innenfläche (52b) erstreckt, und

einen flachen Abschnitt (50d), der an einem Ende des Körperabschnitts (50a) vorgesehen ist, der durch die Innenfläche (52b) des Bodens (52) freiliegt;

wobei die Dichtung (54) ein Fluorharz umfasst,
wobei die Dichtung (54) ferner umfasst:

einen äußeren Dichtungsabschnitt (54a), der zwischen dem äußeren Flanschabschnitt (50b) und der Außenfläche (52a) des Bodens (52) angeordnet ist; und
einen inneren Dichtungsabschnitt (54b), der zwischen dem inneren Flanschabschnitt (50c) und der Innenfläche (52b) des Bodens (52) angeordnet ist,
wobei eine Höhe (H1) des flachen Abschnitts (50d) größer ist als eine Höhe (H3) des Endes des inneren Flanschabschnitts (50c) basierend auf der Innenfläche (52b) des Bodens (52); und
wobei die Dickenänderungsrate des äußeren Dichtungsabschnitts (54a) die folgende Gleichung erfüllt,

$$0\% \leq [(X1 - X2) / X1] \cdot 100(\%) \leq 10\%$$

wobei X1 die Dicke des äußeren Dichtungsabschnitts (54a) bei Raumtemperatur ist und X2 die Dicke des äußeren Dichtungsabschnitts (54a) ist, wenn der äußere Dichtungsabschnitt (54a) 30 Minuten bei 230&uc2b0; belassen wird.

2. Nietstruktur nach Anspruch 1, wobei ein Schmelzpunkt des Fluorharzes 280°C oder höher ist.

3. Nietstruktur nach Anspruch 1, wobei das Fluorharz eines oder mehrere ausgewählt aus der Gruppe bestehend aus Perfluoralkoxy, PFA und Polytetrafluorethylen, PTFE, umfasst.

4. Nietstruktur nach einem der Ansprüche 1 bis 3, wobei ein Vertiefungsabschnitt (55) zwischen dem inneren Flanschabschnitt (50c) und dem flachen Abschnitt (50d) vorgesehen ist.

5. Nietstruktur nach Anspruch 1, wobei die Dicke des inneren Flanschabschnitts (50c) mit zunehmendem Abstand von dem Körperabschnitt (50a) abnimmt.

6. Nietstruktur nach Anspruch 1, wobei die Dichtung (54) umfasst:

einen äußeren Dichtungsabschnitt (54a), der zwischen dem äußeren Flanschabschnitt (50b) und der Außenfläche (52a) des Bodens (52) angeordnet ist; und
einen inneren Dichtungsabschnitt (54b), der zwischen dem inneren Flanschabschnitt (50c) und der Innenfläche (52b) des Bodens (52) angeordnet ist, und
der innere Dichtungsabschnitt (54b) und der äußere Dichtungsabschnitt (54a) in Abhängigkeit von Positionen unterschiedliche Dicken aufweisen.

7. Nietstruktur nach Anspruch 6, wobei ein Bereich, der zwischen einer Innenkante (56) des Durchgangslochs (53), das mit der Innenfläche (52b) des Bodens (52) verbunden ist, und dem inneren Flanschabschnitt (50c) in dem Bereich des inneren Dichtungsabschnitts (54b) angeordnet ist, eine relativ geringere Dicke als andere Bereiche aufweist.

8. Nietstruktur nach Anspruch 1, wobei die Dichtung (54) umfasst:

einen äußeren Dichtungsabschnitt (54a), der zwischen dem äußeren Flanschabschnitt (50b) und der Außenfläche (52a) des Bodens (52) angeordnet ist; und
einen inneren Dichtungsabschnitt (54b), der zwischen dem inneren Flanschabschnitt (50c) und der Innenfläche (52b) des Bodens (52) angeordnet ist, und
wobei sich der innere Dichtungsabschnitt (54b) länger als der innere Flanschabschnitt (5oc) erstreckt.

9. Nietstruktur nach Anspruch 1, wobei ein Radius von einer Mitte (80) des Körperabschnitts (50a) zu einer Kante des äußeren Flanschabschnitts (50b) 10 % bis 60 % eines Radius des Bodens (52) beträgt.

10. Batteriezelle (70), umfassend:

eine Elektrodenanordnung (71, 100), in der eine scheibenförmige erste Elektrodenplatte und eine zweite Elektrodenplatte mit einer dazwischen angeordneten Trennmembran (12) gewickelt sind, und die einen unbeschichteten Abschnitt (10a, 11a, 22, 72, 73, 93) der ersten Elektrodenplatte und einen unbeschichteten Abschnitt (10a, 11a, 22, 72, 73, 93) der zweiten Elektrodenplatte umfasst, die sich von beiden Enden erstrecken und freiliegen;

die Nietstruktur des Elektrodenanschlusses (50) nach einem der Ansprüche 1 bis 9; und

einen Dichtungskörper (74),

wobei die Elektrodenanordnung (71, 100) in der Batteriedose (51) untergebracht ist, die erste Elektrodenplatte und die Batteriedose (51) elektrisch verbunden sind, die zweite Elektrodenplatte und der Elektrodenanschluss (50) elektrisch verbunden sind, und

der Dichtungskörper (74) das offene Ende der Batteriedose (51) abdichtet, um von der Batteriedose (51) isoliert zu sein.

11. Batteriezelle (70) nach Anspruch 10, wobei die Batteriedose (51) einen Wulstabschnitt (76) umfasst, der an die Innenseite der Batteriedose (51) in einem Bereich angrenzend an das offene Ende pressgepasst ist,

der Dichtungskörper (74) eine unpolare Abdeckplatte und eine Dichtung (74b) umfasst, die zwischen einer Kante der Abdeckplatte (74a) und dem offenen Ende der Batteriedose (51) angeordnet ist, und

die Batteriedose (51) einen Crimpabschnitt (75) umfasst, der sich innerhalb der Batteriedose (51) erstreckt und gebogen ist, um die Kante der Abdeckplatte (74a) zusammen mit der Dichtung (74b) zu umgeben und zu fixieren.

12. Batteriezelle (70) nach Anspruch 10 oder 11, ferner umfassend:

eine zweite Stromsammelplatte (79), die an den unbeschichteten Abschnitt (10a, 11a, 22, 72, 73, 93) der zweiten Elektrodenplatte geschweißt ist,

wobei mindestens ein Abschnitt der zweiten Stromsammelplatte (79) an den flachen Abschnitt (50d) des Elektrodenanschlusses (50) geschweißt ist.

13. Batteriezelle (70) nach Anspruch 12, ferner umfassend:

eine Isolierkappe (80'), die zwischen der zweiten Stromsammelplatte (79) und der Innenumfangsfläche (51a, 76a) des Bodens (52) der Batteriedose (51) und zwischen einer Innenumfangsfläche (51a, 76a) einer Seitenwand (55a) der Batteriedose (51) und der Elektrodenanordnung (71, 100) angeordnet ist,

wobei die Isolierkappe (80') ein Schweißloch (80a) umfasst, das den flachen Abschnitt (5od) des Elektrodenanschlusses (50) in Richtung der zweiten Stromsammelplatte (79) freilegt und eine Fläche der zweiten Stromsammelplatte (79) und eine Kante einer Seite der Elektrodenanordnung (71, 100) abdeckt.

14. Batteriepack (200), umfassend mindestens eine Batteriezelle (70) nach einem der Ansprüche 10 bis 13.

15. Fahrzeug, umfassend mindestens ein Batteriepack (200) nach Anspruch 14.

## Revendications

1. Structure de rivetage pour une borne d'électrode (50), comprenant :

un boîtier de batterie (51) ayant un côté ouvert ;
une borne d'électrode (50) rivetée à travers un trou traversant (53) formé au fond (52) du boîtier de batterie (51) ; et
un joint (54) fourni entre la borne d'électrode (50) et un diamètre externe du trou traversant (53),
dans laquelle la borne d'électrode (50) inclut :

une partie de corps (50a) introduite dans le trou traversant (53) ;
une partie de bride externe (50b) s'étendant le long d'une surface externe (52a) depuis une circonférence d'un côté de la partie de corps (50a) exposée à travers la surface externe (52a) du fond (52) ; et
une partie de bride interne (50c) s'étendant vers une surface interne (52b) depuis une circonférence de l'autre côté de la partie de corps (50a) exposée à travers la surface interne (52b) du fond (52), et
une partie plate (50d) fournie à une extrémité de la partie de corps (50a) exposées à travers la surface interne (52b) du fond (52) ;

dans laquelle le joint (54) inclut une résine fluorée,

dans laquelle le joint (54) inclut en outre :

une partie de joint externe (54a) interposée entre la partie de bride externe (50b) et la surface externe (52a) du fond (52) ; et

une partie de joint interne (54b) interposée entre la partie de bride interne (50c) et la surface interne (52b) du fond (52),

dans laquelle une hauteur (H1) de la partie plate (5od) est plus grande qu'une hauteur (H3) de l'extrémité de la partie de bride interne (50c) basée sur la surface interne (52b) du fond (52) ; et

dans laquelle le taux de changement d'épaisseur de la partie de joint externe (54a) satisfait à l'équation suivante,

$$ 0\% \ \leq \ [(X1 - X2) \, / \, X1] \ \cdot \ 100(\%) \ \leq \ 10\% $$

où X1 est l'épaisseur de la partie de joint externe (54a) à température ambiante, et X2 est l'épaisseur de la partie de joint externe (54a) quand la partie de joint externe (54a) est laissée à 230°C pendant 30 minutes.

2. Structure de rivetage selon la revendication 1, dans laquelle un point de fusion de la résine fluorée est égale ou supérieure à 280°C.

3. Structure de rivetage selon la revendication 1, dans laquelle la résine fluorée inclut un ou plusieurs éléments sélectionnés dans le groupe constitué de perfluoroalkoxy, PFA, et de polytétrafluoroéthylène, PTFE.

4. Structure de rivetage selon l'une des revendications 1 à 3, dans laquelle une partie de renfoncement (55) est fournie entre la partie de bride interne (50c) et la partie plate (50d).

5. Structure de rivetage selon la revendication 1, dans laquelle l'épaisseur de la partie de bride interne (50c) diminue à mesure qu'une distance de la partie de corps (50a) augmente.

6. Structure de rivetage selon la revendication 1, dans laquelle le joint (54) inclut :

une partie de joint externe (54a) interposée entre la partie de bride externe (50b) et la surface externe (52a) du fond (52) ; et

une partie de joint interne (54b) interposée entre la partie de bride interne (50c) et la surface interne (52b) du fond (52), et

la partie de joint interne (54b) et la partie de joint externe (54a) ont différentes épaisseurs en fonction des positions.

7. Structure de rivetage selon la revendication 6, dans laquelle une région interposée entre un bord interne (56) du trou traversant (53) connecté avec la surface interne (52b) du fond (52) et la partie de bride interne (50c) dans la région de la partie de joint interne (54b) a une épaisseur relativement plus petite que d'autres régions.

8. Structure de rivetage selon la revendication 1, dans laquelle le joint (54) inclut :

une partie de joint externe (54a) interposée entre la partie de bride externe (50b) et la surface externe (52a) du fond (52) ; et

une partie de joint interne (54b) interposée entre la partie de bride interne (50c) et la surface interne (52b) du fond (52), et

la partie de joint interne (54b) s'étend plus en longueur que la partie de bride interne (50c).

9. Structure de rivetage selon la revendication 1, dans laquelle un rayon depuis un centre (80) de la partie de corps (50a) à un bord de la partie de bride externe (50b) est 10 % à 60 % d'un rayon du fond (52).

10. Élément de batterie (70), comprenant :

un ensemble d'électrode (71, 100) dans lequel une première plaque d'électrode et une deuxième plaque d'électrode en forme de feuille sont enroulées avec une membrane de séparation (12) interposée entre ces plaques, et qui inclut une partie non revêtue (10a, 11a, 22, 72, 73, 93) de la première plaque d'électrode et une partie non revêtue (10a, 11a, 22, 72, 73, 93) de la deuxième plaque d'électrode, qui sont étendues et exposées depuis les deux extrémités ;

la structure de rivetage de la borne d'électrode (50) selon l'une quelconque des revendications 1 à 9 ; et

un corps d'étanchéité (74),

dans laquelle l'ensemble d'électrode (71, 100) est logé dans le boîtier de batterie (51), la première plaque d'électrode et le boîtier de batterie (51) sont connectés électriquement, la deuxième plaque d'électrode et la borne d'électrode (50) sont connectées électriquement, et

le corps d'étanchéité (74) scelle l'extrémité ouverte du boîtier de batterie (51) à isoler du boîtier de batterie (51).

11. Élément de batterie (70) selon la revendication 10, dans laquelle le boîtier de batterie (51) inclut une partie de bourrelet (76) pressée par ajustement à l'intérieur du boîtier de batterie (51) dans une région adjacente à l'extrémité ouverte,

le corps d'étanchéité (74) inclut une plaque de capuchon non polaire et un joint d'étanchéité (74b) interposé entre un bord de la plaque de capuchon (74a) et l'extrémité ouverte du boîtier de batterie (51), et

le boîtier de batterie (51) inclut une partie de sertissage (75) qui s'étend et est repliée à l'intérieur du boîtier de batterie (51) pour entourer et fixer le bord de la plaque de capuchon (74a) avec le joint d'étanchéité (74b).

12. Élément de batterie (70) selon la revendication 10 ou 11, comprenant en outre :

une deuxième plaque collectrice de courant (79) soudée à la partie non revêtue (10a, 11a, 22, 72, 73, 93) de la deuxième plaque d'électrode,

au moins une partie de la deuxième plaque collectrice de courant (79) est soudée à la partie plate (50d) de la borne d'électrode (50).

13. Élément de batterie (70) selon la revendication 12, comprenant en outre :

un capuchon isolant (80') interposé entre la deuxième plaque collectrice de courant (79) et la surface périphérique interne (51a, 76a) du fond (52) du boîtier de batterie (51), et entre une surface périphérique interne (51a, 76a) d'une paroi latérale (55a) du boîtier de batterie (51) et l'ensemble d'électrode (71, 100),

dans laquelle le capuchon isolant (80') inclut un trou de soudage (80a) exposant la partie plate (50d) de la borne d'électrode (50) vers la deuxième plaque collectrice de courant (79), et recouvre une surface de la deuxième plaque collectrice de courant (79) et un bord d'un côté de l'ensemble d'électrode (71, 100).

14. Bloc batterie (200) incluant au moins un élément de batterie (70) selon l'une quelconque des revendications 10 à 13.

15. Véhicule incluant au moins un bloc batterie (200) selon la revendication 14.

[Figure 1]

[Figure 2]

WINDING DIRECTION

11

10

12

Z

X

EP 4 325 654 B1

[Figure 3]

27

[Figure 4]

[Figure 5]

[Figure 6]

[Figure 7]

[Figure 8]

[Figure 9]

[Figure 10]

[Figure 11]

[Figure 12]

[Figure 13]

GASKET MELTING OCCURS

[Figure 14]

**GASKET MELTING NOT OCCURS**

[Figure 15]

**EP 4 325 654 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4239784 A2
- US 2004023108 A1
- KR 20200020173 A
- US 6677082 B
- US 6680143 B